(19) Europäisches Patentamt
European Patent Office
Office européen des brevets

(11) **EP 1 901 444 B1**

(12) **EUROPEAN PATENT SPECIFICATION**

(45) Date of publication and mention
of the grant of the patent:
**11.03.2009   Bulletin 2009/11**

(51) Int Cl.:
***H04B 7/06*** *(2006.01)*

(21) Application number: **06019361.2**

(22) Date of filing: **15.09.2006**

(54) **Pilot overhead reduction in wireless communication systems utilizing multiple transmit antennas**

Reduzierung von Pilot-Overhead in einem drahtlosen Kommunikationssystem mit mehreren Sendeantennen

Réduction de frais de pilote dans un système de communication sans fil utilisant plusieurs antennes de transmission

(84) Designated Contracting States:
**DE GB**

(43) Date of publication of application:
**19.03.2008   Bulletin 2008/12**

(73) Proprietor: **NTT DoCoMo Inc.**
**Chiyoda-Ku**
**Tokyo 100-6150 (JP)**

(72) Inventor: **Cosovic, Ivan**
**80339 München (DE)**

(74) Representative: **Stöckeler, Ferdinand et al**
**Schoppe, Zimmermann,**
**Stöckeler & Zinkler**
**Postfach 246**
**82043 Pullach bei München (DE)**

(56) References cited:
**EP-A- 1 566 917          EP-A- 1 628 419**
**EP-A- 1 681 783          WO-A-01/69814**
**WO-A-02/25831**

**Description**

The present invention is in the field of wireless communication systems where pilot channels, i.e. pilot symbols are used to enable channel estimation at the receiver, and where channel state information is available at the transmitter in order to carry out precoding as for example proposed for future mobile communications systems using orthogonal frequency division multiplexing (OFDM).

Channel estimation is usually carried out with the aid of training or pilot symbols multiplexed with transmitted data symbols. Overviews of these channel estimation schemes can for example be found in

- G. Auer and E. Karipidis. Pilot-Symbol Aided Channel Estimation for OFDM: a Separated Approach for Smoothing and Interpolation. In Proc. IEEE Intern. Conf. Commun. (ICC'05), Seoul, Korea, May 2005;
- ETSI EN 300 744, V 1.4.1 (2001-01). Digital Video Broadcasting (DVB) ; Framing Structure, Channel Coding and Modulation for Digital Terrestrial Television. European standard (telecommunication series), European Telecommunication Standards Institute (ETSI), Valbonne France, 2001;
- P. Höher, S. Kaiser, and P. Robertson. Pilot-Symbol Aided Channel Estimation in Time and Frequency. In Proc. Communication Theory Mini-Conf. (CTMC) within IEEE Global Telecommun. Conf. (Globecom'97), Phoenix, USA, pages 90-96, 1997;
- P. Höher. TCM on Frequency Selective Land-Mobile Radio Channels. In Proc. 5th Tirrenia Int. Workshop on Fig. Commun., Tirrenia, Italy, pages 317-328, September 1991;
- R. Nilsson, O. Edfors, M. Sandell, and P.O. Börjesson. An Analysis of Two-Dimensional Pilot-Symbol Assisted Modulation for OFDM. In Proc. IEEE Intern. Conf. Pers. Wireless Commun. (ICPWC'97), Mumbai (Bombay), India, pages 71-74, 1997;

Pilot symbols add overhead and consume power, i.e. they consume valuable radio resources. In many applications there is a need for so-called dedicated pilots, which are specific for each antenna and/or user. Dedicated pilots have to be orthogonal to each other, which is usually achieved by separating them in the time and/or frequency and/or code domain thus causing substantial overheads.

One example for utilization of orthogonal pilot symbol patterns occurs when utilizing transmit diversity, where from a base station several transmit antennas are utilized to transmit a signal towards a user equipment. In some scenarios, i.e. for some transmit diversity schemes the user equipment requires knowledge about each of the transmission channels between each transmit antenna and each receive antenna. For this purpose pilot symbols need to be transmitted from each of the transmit antennas to the user equipment, assuring that the pilot symbols transmitted by different transmit antennas remain orthogonal so that the user equipment can separate them and carry out channel estimation for each of the radio channels.

One example system is currently standardized and specified by the 3rd Generation Partnership Project and called Long Term Evolution (3GPP LTE), cf. 3$^{rd}$ Generation Partnership Project (3GPP), "Physical layer aspects for evolved Universal Terrestrial Radio Access (UTRA)", June 2006.

In order to illustrate an example of state of the art pilot schemes a basic OFDM (OFDM = orthogonal frequency division multiplexing) is considered in the following similar to what is currently under consideration in the technical report "TR25.814" of the 3GPP specifications.

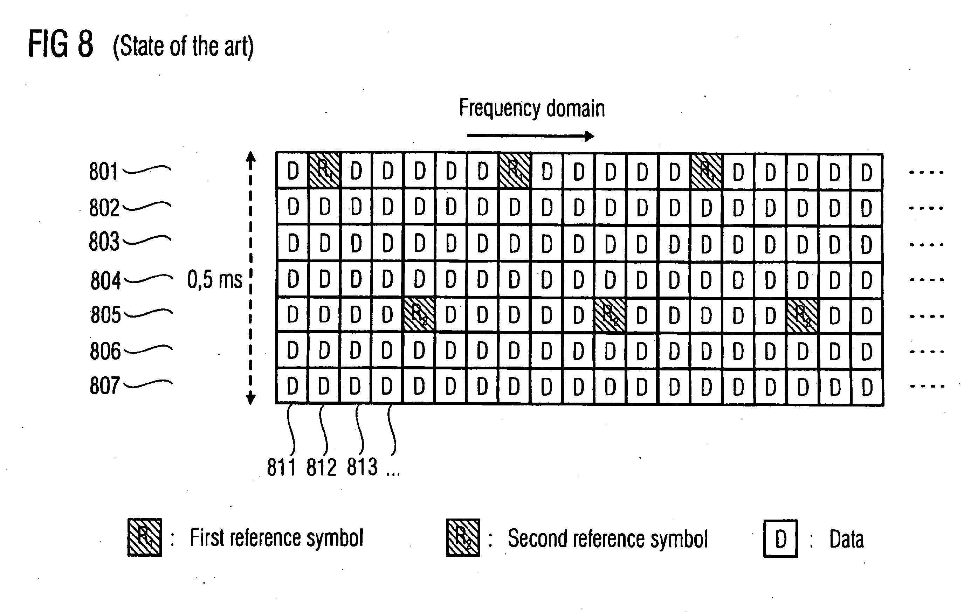

A basic OFDM frame is illustrated in Fig. 8. Fig. 8 shows a basic OFDM frame, which is of duration 0.5ms, which is referred to as one time transmission interval (TTI) within the 3GPP specifications. Along the x-axis in Fig. 8 the frequency domain is shown indicating the orthogonal subcarriers 811, 812, etc. according to the basic OFDM scheme. As it can be seen in Fig. 8 one OFDM frame consists of seven OFDM symbols 801-807 and is used for transmission of both data and reference or pilot symbols. In Fig. 8, D indicates the transmission of data and $R_1$ respectively $R_2$ indicate reference or pilot symbols. The reference or pilot symbols can be used for the purposes of channel estimation at the receiver. In the case illustrated in Fig. 8 a single-input-single-output (SISO) communication is assumed resulting in non-dedicated pilots and a chip overhead, i.e. the portion of the data rate that is consumed by pilot or reference symbols, of approximately 5%.

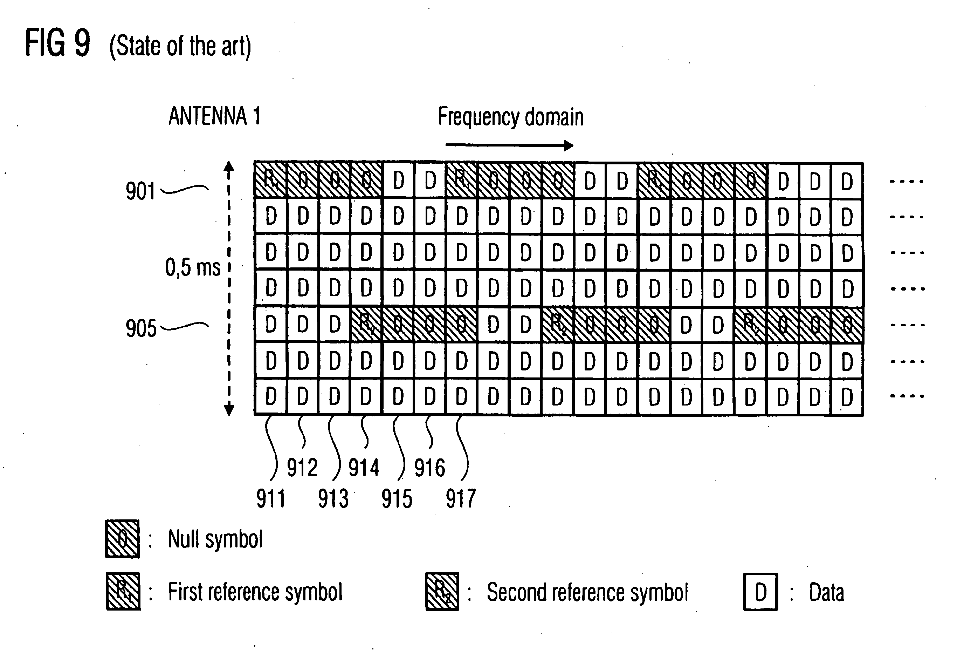

An example of a multiple-input-single-output (MISO) transmission shall be introduced referring to Fig. 9 to Fig. 12. Fig. 9 to Fig. 12 give examples of orthogonal pilots for transmission frames of four antennas, namely antenna 1, antenna 2, antenna 3, and antenna 4, respectively, assuming transmission with four transmit antennas. To force orthogonality among pilots different pilot positions within the subframes are used for different antennas and null symbols are included. This represents a conventional approach to separate pilot symbols. It can be seen that the pilot overhead is increased in comparison to the SISO case and is around 18%.

Fig. 9 shows the considered OFDM frame for antenna 1. Similar to what was described for Fig. 8, Fig. 9 shows an OFDM frame with a duration of 0.5 ms and with the different subcarriers 911, 912,... along the frequency axis. As can be seen in the upper left corner of the OFDM frame a reference symbol $R_1$ is transmitted on the first subcarrier while null symbols, indicated by a 0, are transmitted on the second, third, and fourth subcarrier. This scheme is repeated every six subcarriers as can easily be seen looking at the first OFDM symbol 901 at the top of Fig. 9, which is referred to the first OFDM symbol within the considered OFDM frame. Considering the fifth OFDM symbol 905, i.e. the fifth row within the OFDM frame displayed in Fig. 9 a similar scheme is found for the second reference symbol $R_2$. During the fifth OFDM symbol the reference symbol $R_2$ is transmitted on the fourth subcarrier 914, while null symbols are transmitted on the fifth 915, sixth 916, and seventh subcarrier 917. Similar to what was described for the first OFDM symbol the reference symbol scheme of the second reference symbol $R_2$ is also repeated along the frequency axis every six subcarriers.

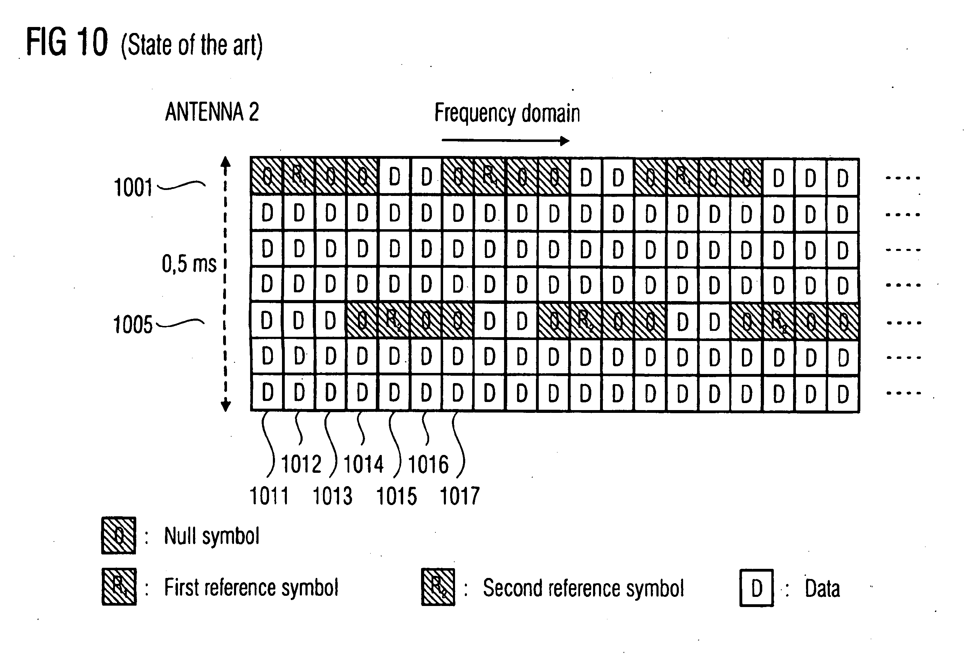

Fig. 10 shows a similar scheme as displayed in Fig. 9, however considering the second transmit antenna. Looking at the first OFDM symbol 1001 in the scheme shown in Fig. 10, it can be seen that the first reference symbol $R_1$ is now transmitted on the second subcarrier 1012, during which a null symbol is transmitted from the first transmit antenna as can be easily seen from the scheme shown in Fig. 9. Accordingly, in order to remain orthogonality a null symbol is transmitted on the second antenna on the first subcarrier 1011 during the first OFDM symbol, so the signal transmitted on the second transmit antenna would not interfere with the pilot symbol being transmitted on the first transmit antenna during the same time according to Fig. 9.

Similar considerations hold for the second reference symbol $R_2$, which is transmitted within the fifth OFDM symbol utilizing the subcarriers 1014, 1015, 1016, and 1017. Similarly, it can be seen, that on the fourth subcarrier 1014 a null symbol is transmitted from the second antenna, in order not to interfere with the reference symbol transmitted by the first antenna and the second reference symbol $R_2$ is transmitted on subcarrier 101E, where the scheme shown in Fig. 9 indicates that on antenna 1 the null symbol is transmitted on that subcarrier.

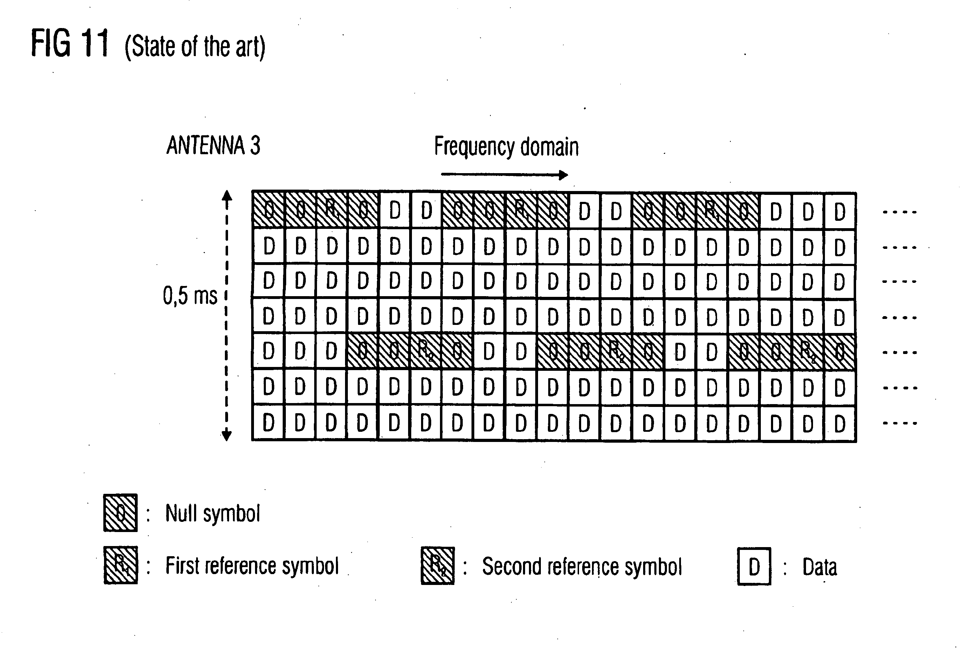

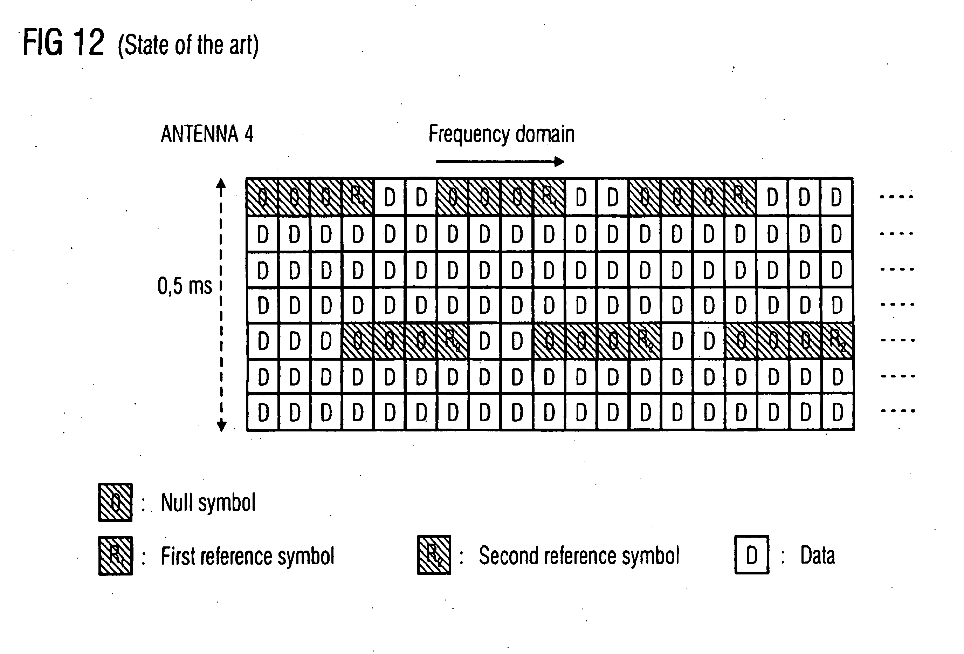

Figs. 11 and 12 show the according schemes for the transmit antennas 3 and 4. Correspondingly in Fig. 11, on antenna 3 the third subcarrier is utilized to transmit the first reference symbol $R_1$ and null symbols are transmitted during the first OFDM symbol on the first, second and fourth subcarrier in order not to interfere with the signals being transmitted on the subcarriers from the other transmit antennas. This scheme is then repeated along the frequency axis. Looking at the second reference symbol $R_2$, which is transmitted during the fifth OFDM symbol a similar scheme can be found.

Fig. 12 shows the same OFDM frame for the fourth transmit antenna where similar observations can be made, since from the fourth transmit antenna for example for the first reference symbol $R_1$, which is transmitted during the first OFDM symbol the fourth subcarrier is utilized, while null symbols are transmitted on the first three subcarriers in order to orthogonalize with the other signals from the other transmit antennas.

From the pilot scheme explained utilizing Figs. 9 to 12 it can be seen that pilot overhead is increased in comparison to the SISO case and is around 18%. It can be concluded that induced overhead could represent serious limitations as it reduces data throughput significantly, where in the case of four transmit antennas as it was considered above four subcarriers are utilized per reference symbol.

EP 1 681 783 A1 discloses a wireless system, comprising a transmitting device having a plurality of antennas capable of transmitting radio signals different from each other from these antennas, and a receiving device having at least one antenna and receiving the radio signals transmitted from the transmitting device. The transmitting device can be configured for transmitting a plurality of different known signals having signal patterns orthogonal to each other in order to make the receiver estimate a transmission path characteristic.

EP 1 566 917 A2 discloses an apparatus, methods and processor control code for a MIMO (MIMO = multiple input multiple output) communications system. It is further disclosed that in a MIMO system channel estimation may be performed by transmitting a training sequence from each transmit antenna in turn or by simultaneously transmitting substantially orthogonal training sequences from all the transmit antennas. The MIMO channel estimate matrix can then be constructed column by column.

WO 01/69814 relates to a method and system for transmitting in a wireless communication system utilizing antenna arrays being composed of antenna sub-arrays. The transmission beam of at least one of the at least two sub-arrays is at least in part controlled based on a feedback information received from a receiving means. Feedback is provided on a basis of channel estimation at the receiving means, which again is based on pilot channels, which are transmitted from the respective sub-arrays.

WO 02/25831 A2 discloses MMSE (MMSE = minimum means square error) reception of pilot and data channels in a communication system utilizing transmit diversity. In order to enable channel estimation, the communication system utilizes per antenna pilot symbols in order to adapt MMSE receivers to respective pilot sequences.

It is the objective of the present invention to provide a pilot concept, which enables efficient channel estimation at a receiver with a reduced overhead.

This objective is achieved by a transmitter apparatus according to claim 1, a method for transmitting according to claim 5, and a communication system according to claim 6.

The objective is achieved by a transmitter apparatus for transmitting signals to a receiver comprising a first transmit antenna with a first radio channel $\underline{H}_1$ to the receiver and a second transmit antenna with a second radio channel $\underline{H}_2$ to the receiver, being adapted for simultaneously transmitting at the same frequency a first pilot symbol from the first transmit antenna and a second pilot symbol from the second transmit antenna, the first and second pilot symbols being adapted to the first and second radio channels $\underline{H}_1$ and $\underline{H}_2$, such that the first pilot symbol and the second pilot symbol can be determined from a signal generated by superimposing the signals transmitted over the first and second radio channels $\underline{H}_1$ and $\underline{H}_2$.

The objective is further achieved by a receiver apparatus for determining a first and a second pilot symbol from a received signal, which is a superposition of the first pilot symbol being transmitted from a first transmit antenna and a second pilot symbol being transmitted from a second transmit antenna, the first and second pilot symbols being transmitted simultaneously at the same frequency, comprising a receive antenna for receiving the signal and a signal for determining the first and the second pilot symbol by evaluating a complex amplitude of the receive signal.

The objective is further achieved by a communication system comprising a transmitter apparatus and a receiver apparatus as described above.

The present invention is based on the finding that in MISO systems that have channel state information (CSI) available at the transmitter, or at least its phase, pilot symbols can be utilized that can be separated at the receiver via real and imaginary separation of the complex amplitude of a signal, where the signal is superimposed by a simultaneous transmission from two transmit antennas. With this finding the pilot overhead in the systems can be reduced by 50%.

The inventive apparatuses and methods for reduction of pilot overhead in MISO systems is especially applicable for OFDM systems and multi carrier systems. The inventive methods are applicable to MISO systems that have available channel state information, or at least their phase, at a transmitter and is based on orthogonal separation of pilot symbols via real and imaginary part of a complex amplitude of a superimposed signal.

Orthogonal separation of pilot symbols is often required in wireless communication systems that perform coherent detection at the receiver. Existing methods achieve this by separating pilot symbols in the time or frequency domain. However, the orthogonal pilot symbols cause high overheads as they occupy significant parts of the OFDM transmission frames. Embodiments of the present invention reduce this overhead, represented by pilot symbols and associated null symbols, by a factor of two with respect to the above-mentioned, existing methods.

The proposed inventive apparatuses and methods are applicable to all systems that utilize more than one transmit antenna, taking advantage of channel estimation by utilizing pilot symbols and having full or at least partial channel state information available at a transmitter. High overhead caused by the dedicated pilot symbols is a significant problem in MISO systems. Each transmit antenna requires transmission of pilot symbols that are orthogonal to the pilot transmitted by other antennas. This separation is usually done in time or frequency resulting in insertion of not only pilot, but also null symbols. The proposed method is capable of reducing a number of reserved chips, for pilot and null symbols, by a factor of two in comparison to existing methods by exploiting the real and imaginary part of a complex amplitude to separate the pilots among antennas.

Embodiments of the present invention are capable to reduce pilot overheads required for orthogonal pilots by a factor of two in comparison to conventional solutions which separate pilots in time and/or frequency and/or code domain. For example, assuming an OFDM frame and four transmission antennas, this overhead is reduced from 18% to 9%. The reduction can be achieved in systems which exploit channel state information or at least its phase at a transmitter by precoding the pilot symbols with the phase of the fading channel and enabling the orthogonality via real and imaginary dimension in the complex plane.

Embodiments of the present invention will be detailed using the Figures attached, in which

Fig. 1    shows a block diagram of an embodiment of an inventive transmitter apparatus and receiver apparatus;

Fig. 2    shows a block diagram of a MISO OFDM transmission system;

Fig. 3    shows a complex plane with precoded pilot symbols;

Fig. 4    shows an embodiment of an OFDM frame for a first transmit antenna within a system utilizing four transmit antennas;

Fig. 5    shows an embodiment of an OFDM frame for a second transmit antenna within a system utilizing four transmit antennas;

Fig. 6    shows an embodiment of an OFDM frame for a third transmit antenna within a system utilizing four transmit antennas;

Fig. 7    shows an embodiment of an OFDM frame for a fourth transmit antenna in a system utilizing four transmit antennas;

Fig. 8 illustrates a state of the art OFDM frame;

Fig. 9 shows a state of the art OFDM frame of a first transmit antenna in a system utilizing four transmit antennas;

Fig. 10 shows a state of the art OFDM frame for a second transmit antenna in a system utilizing four transmit antennas;

Fig. 11 shows a state of the art OFDM frame for a third transmit antenna in a system utilizing four transmit antennas; and

Fig. 12 shows a state of the art OFDM frame for a fourth transmit antenna in a system utilizing four transmit antennas.

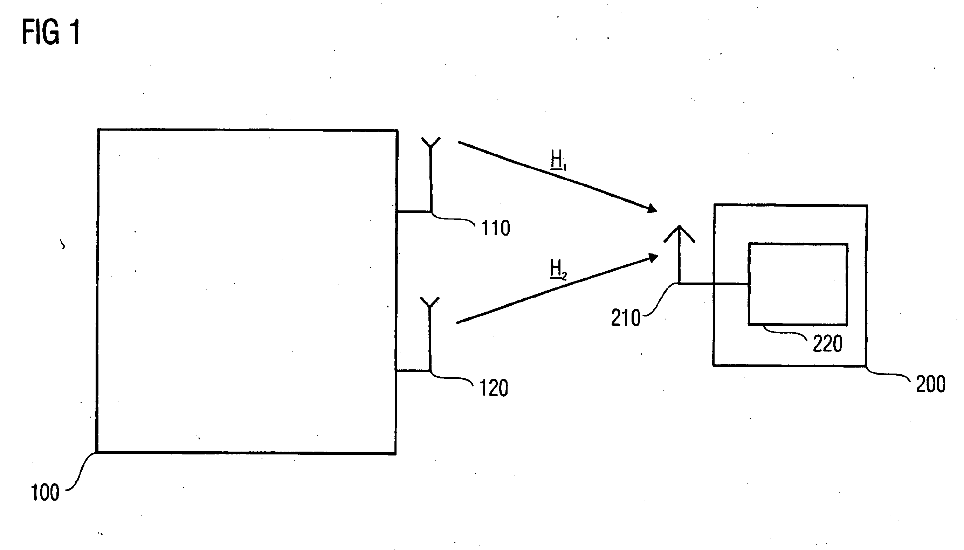

Fig. 1 shows a transmitter apparatus 100 for transmitting signals to a receiver 200 comprising a first transmit antenna 110 with a first radio channel $\underline{H}_1$ to the receiver 200 and a second transmit antenna 120 with a second radio channel $\underline{H}_2$ to the receiver 200, being adapted for simultaneously transmitting at the same frequency a first pilot symbol from the first transmit antenna 110 and a second pilot symbol from the second transmit antenna 120, the first and second pilot symbols being adapted to the first and second radio channels $\underline{H}_1$ and $\underline{H}_2$, such that the first pilot symbol and the second pilot symbol can be determined from a signal generated by superimposing the signals transmitted over the first and second radio channels $\underline{H}_1$ and $\underline{H}_2$.

Fig. 1 further shows a receiver apparatus 200 for determining a first and a second pilot symbol from a received signal, which is a superposition of the first pilot symbol being transmitted from a first transmit antenna 110 and a second pilot symbol being transmitted from a second transmit antenna 120, the first and second pilot symbols being transmitted simultaneously at the same frequency, the receiver apparatus 200 comprising a receive antenna 210 for receiving the signal and a signal processor 220 for determining the first and second pilot symbol by evaluating a complex amplitude of the received signal.

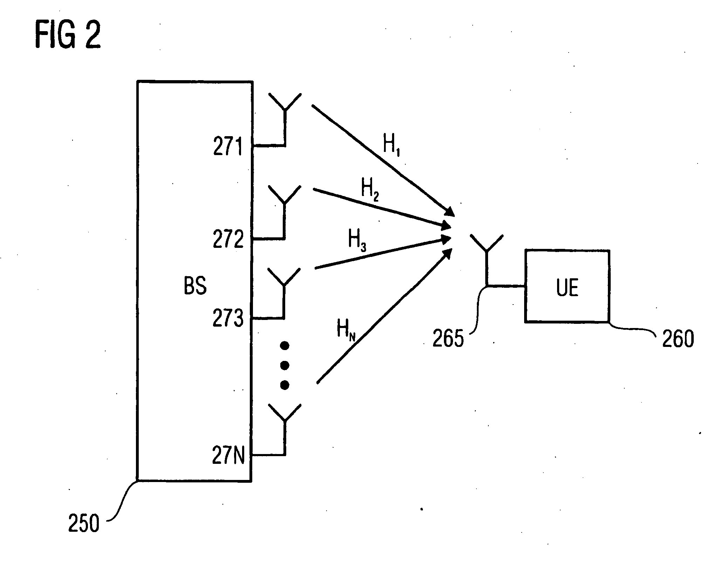

In the following the general case of a system utilizing several transmit antennas transmitting to at least one receive antenna will be considered, utilizing an example of an MISO OFDM system with a total of N transmit antennas and M subcarriers. A block diagram of the MISO OFDM transmission system is illustrated in Fig. 2. Fig. 2 shows a base station (BS) 250 and a user equipment (UE) 260 with a receive antenna 265.

Furthermore Fig. 2 illustrates N transmit antennas 271...27N. Data transmitted from the N transmit antennas is received at the user equipment 260 after propagation through N fading channels that are represented with N complex MxM matrices $\mathbf{H}_1$, $\mathbf{H}_2$, ..., $\mathbf{H}_N$. As an OFDM system is considered and due to the insertion of cyclic prefix $\mathbf{H}_1$, $\mathbf{H}_2$, ..., $\mathbf{H}_N$ are assumed to be diagonal. The indices describing the different OFDM symbols (i.e. time dependence) are dropped for convenience, as embodiments of the inventive apparatuses and methods can be described considering a single OFDM symbol.

In the case of coherent detection, the user equipment requires estimates of the fading channels $\mathbf{H}_1$, $\mathbf{H}_2$, ..., $\mathbf{H}_N$. As described above, general estimation is usually achieved via an insertion of time/frequency orthogonal pilot symbols in OFDM transmission frames as it was explained and illustrated with the help of Figs. 8-12. Calculation of channel estimates on pilot's positions, and interpolation of these initial estimates over the entire OFDM frames are carried out in these systems. Alternatively, in systems which exploit channel state information at both transmitter and receiver, estimation can require estimation of the precoded channel state information at the receiver an in such cases there is a need to estimate $\mathbf{G}_1\mathbf{B}_1$, $\mathbf{G}_2\mathbf{H}_2$, ..., $\mathbf{G}_N\mathbf{H}_N$ where the matrices $\mathbf{G}_1$, $\mathbf{G}_2$, ..., $\mathbf{G}_N$ represent the applied precoding scheme.

For example, if phase precoding is performed, a matrix $\mathbf{G}_i$, i=1,2, ...,N, is diagonal and is given with diagonal elements $G_{i,1} = (H_{i,1})^*/|H_{i,1}|$, i=1,2,...,N, 1=1, 2,...,M, where $H_{i,1}$ represents 1-th diagonal element of the matrix $\mathbf{H}_N$. Direct estimation of the precoded channel state information $\mathbf{G}_i\mathbf{H}_i$ can be enabled by precoding pilot symbols in the same way as data symbols.

As it was already mentioned above, embodiments of the inventive approach reduce the pilot overhead by a factor of two by exploiting the phase of the channel state information, which is assumed to be available at the transmitter. The assumption of having the channel state information at a transmitter is reasonable in for example time division duplex (TDD= Time Division Duplex) systems such as the WINNER system concept, cf. IDT-2003-507581 WINNER, "D2.10 Final Report on Identified RI Key Technologies, System Concept, and Their Assessment", December 2005. In this system the channel state information is often also required at the receiver as this can further improve the system performance. Embodiments of the present invention focus on such systems and utilize methods for reduction of the associated pilot symbol overhead.

An important observation is that these systems always apply such precoding, which corrects the phase of the fading channel already at the transmitter making its estimation obsolete at the receiver. Since the phase of the channel is known at the transmitter and not required at the receiver, it is sufficient to estimate $|\mathbf{H}_1|$, $|\mathbf{H}_2|$, ..., $|\mathbf{H}_N|$ instead $\mathbf{H}_1$, $\mathbf{H}_2$, ..., $\mathbf{H}_N$ at a receiver, where $| . |$ denotes the magnitude of the complex channel coefficient. Alternatively, as already mentioned, precoded channel information represented by $\mathbf{G}_1\mathbf{H}_1$, $\mathbf{G}_2\mathbf{H}_2$, ..., $\mathbf{G}_N\mathbf{H}_N$ can be transmitted at a receiver where $\mathbf{G}_i\mathbf{H}_i = |\mathbf{G}_i\mathbf{H}_i|$ in practical systems, i.e. the phase of the channel is corrected by a precoding. These observations motivate to exploit orthogonal real and imaginary dimension in the complex plane as the precoded channel state information is real-valued. By doing so, two precoded pilot symbols can share the same time/frequency chip in an orthogonal fashion if they are designed as such that one occupies real dimension and the other occupies the imaginary dimension at the user equipment receiver.

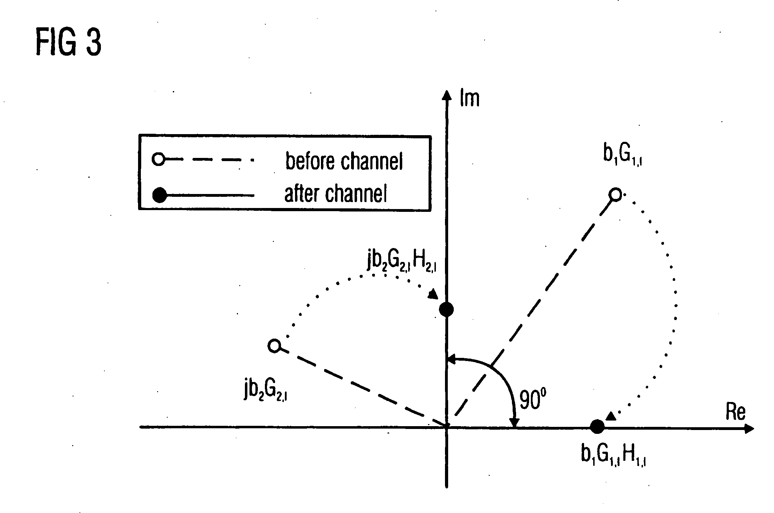

An illustration of the above-mentioned principle is given in Fig. 3. Fig. 3 shows a complex plane 300 with a real axis 310 and an imaginary axis 320. Furthermore, Fig. 3 shows two pilot symbols $b_1 G_{1,1}$ and $jb_2 G_{2,1}$, being the precoded versions of the pilot symbols $b_1$ and $b_2$ as available at the transmit antennas, and Fig. 3 also shows the precoded pilot symbols after they have passed the radio channels $b_1 G_{1,1} H_{1,1}$ and $jb_2 G_{2,1} H_{2,1}$. The real value pilot symbol $b_1$ is transmitted through antenna 1, and the real valued pilot symbol $b_2$ is transmitted through antenna 2, where Fig. 3 shows that the precoded pilot symbol $b_2$ transmitted over transmit antenna 2 is precoded in the imaginary dimension.

The pilot symbols are shown prior to and after the transmission to the fading channels, with $j = (-1)^{0.5}$, $H_{1,1}$, and $H_{2,1}$ are fading coefficients over 1-th subcarrier of the antenna 1 the antenna 2, and $G_{1,1}$ and $G_{2,1}$ are precoding coefficients over 1-th subcarrier of the antenna 1 and antenna 2, respectively.

In one embodiment of the present invention the precoding coefficients correct only the phase of the fading channel. As indicated in Fig. 3, the orthogonality among the two pilot symbols $b_1$ and $b_2$ is obtained or provided at a user equipment receiver. The received signal on the 1-th subcarrier which bares the shared pilot of both antennas equals

$$r_1 = H_{1,1} G_{1,1} b_1 + j G_{2,1} H_{2,1} b_2 + n_1.$$

Where $n_1$ is additive white Gaussian noise (AWGN) contribution.

Assuming phase precoding, i.e.

$$G_{i,1} = (H_{i,1})^* / |H_{i,1}|$$

is applied the above equation reduces to

$$r_1 = |H_{1,1}| b_1 + j |H_{2,1}| b_2 + n_1 .$$

This shows that with the inventive apparatuses and methods the pilot symbols $b_1$ and $b_2$, are orthogonally separated via real and imaginary dimensions enabling the estimation of magnitude of $|H_{1,1}|$ and the magnitude of $|H_{2,1}|$. From this analysis, it follows that a number of chips that have to be reserved for pilot and null symbols equals

$$N_{pilots,prop} = N_{pilots,conv} / 2,$$

if N>1.

$N_{pilots,prop}$ and $N_{pilots,conv}$ denote the number of reserved chips required for the proposed and the conventional approach, respectively, assuming the same number of transmit antennas in both cases.

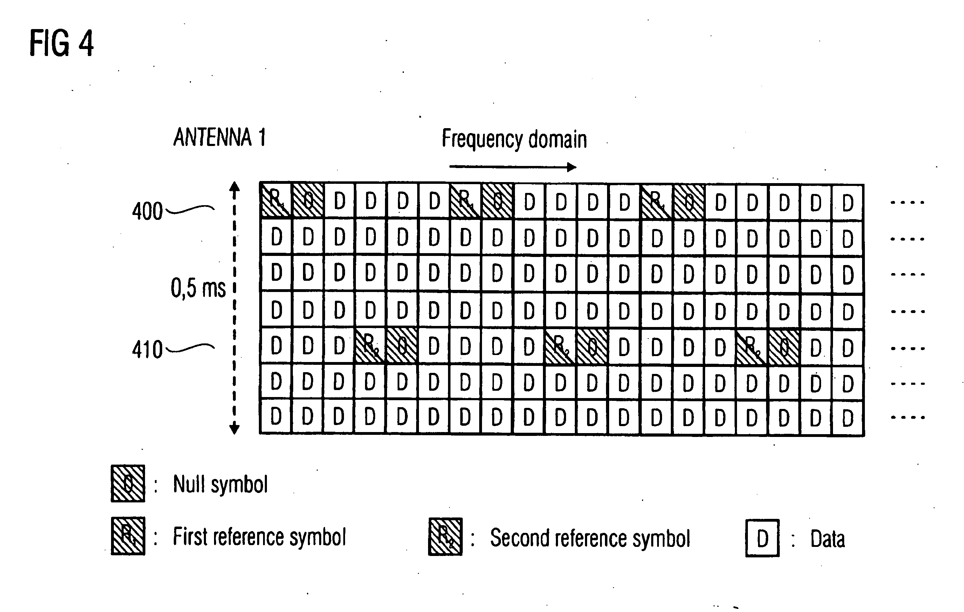

In the following the pilot overhead reduction, which is achieved with embodiments of the present invention is illustrated using a similar example as for the state of the art OFDM pilot pattern in the Figs. 9-12. Figs. 4,5,6 and 7 show four OFDM frames, where a first reference symbol $R_1$ is transmitted during the first OFDM symbol 400 and a second reference symbol $R_2$ is transmitted during the fifth OFDM symbol 410. Each of the four OFDM frames in the Figs. 4-7 shows a first reference symbol $R_1$ being transmitted with the first OFDM symbol 400, which is, repeated every six subcarriers. From all of the four transmit antennas considered in the example, secondary reference symbols $R_2$ are transmitted during the fifth OFDM symbol 410 and are also being repeated every six subcarriers.

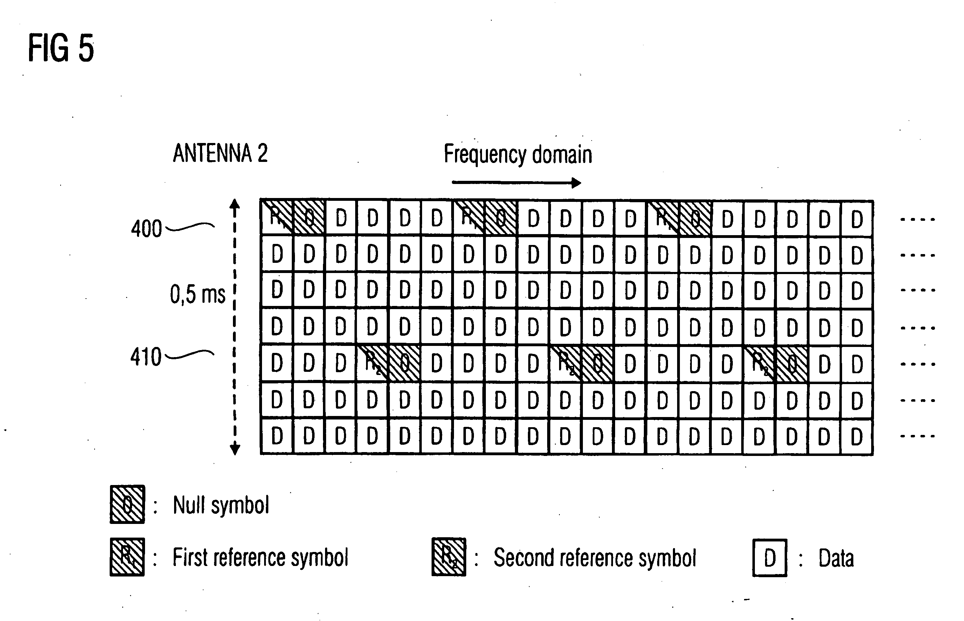

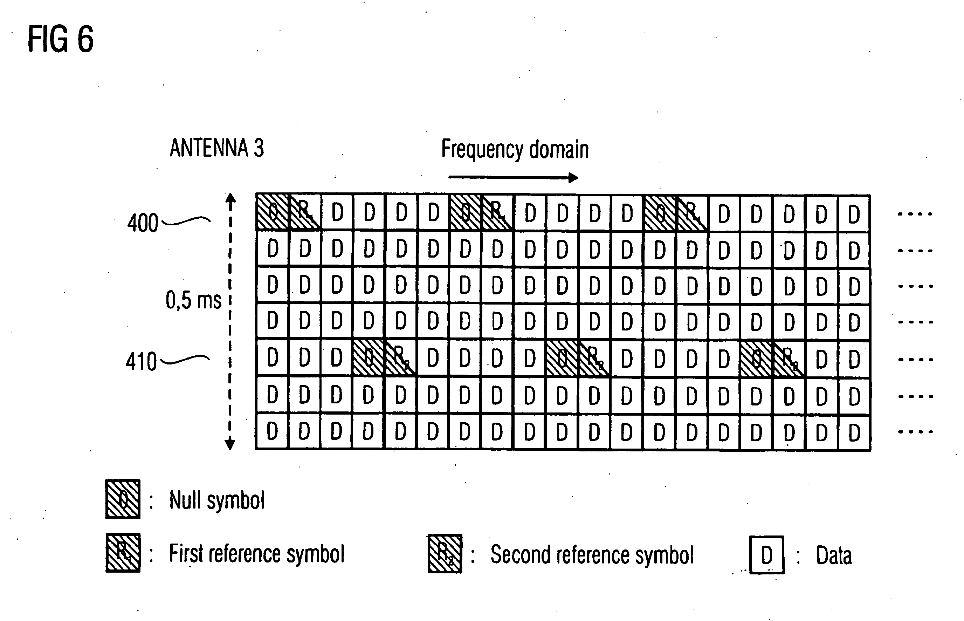

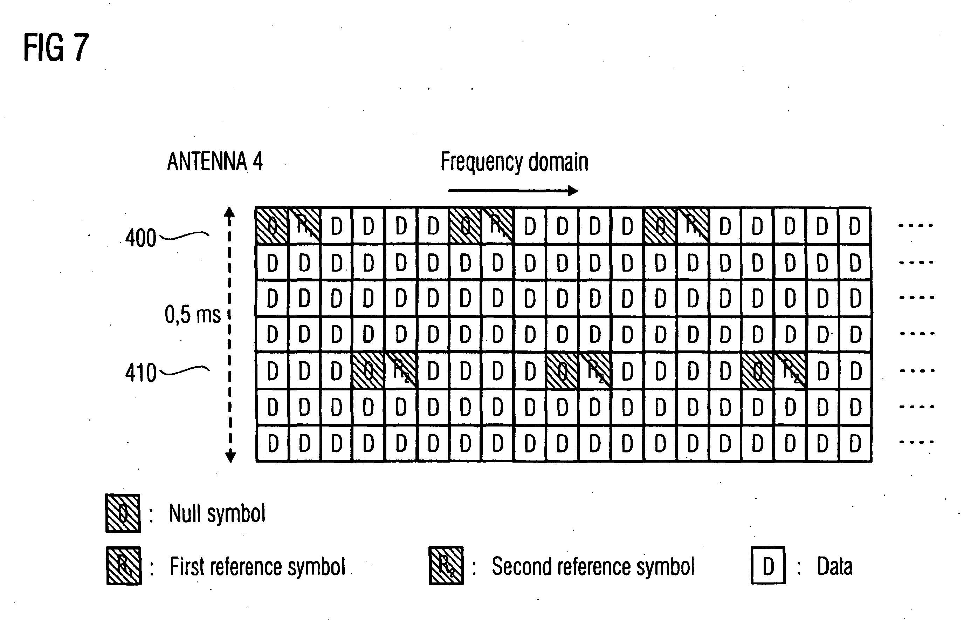

Comparing the pilot pattern for the first and the second transmit antenna which are displayed in Figs. 4 and 5, it can be seen, that both transmit antennas can use the same subcarrier of the same OFDM symbol to transmit the first reference symbol $R_1$. The first and second reference symbols $R_1$ and $R_2$ are separated at the receiver utilizing the real and imaginary part of the complex amplitude of the received signal. While transmit antenna 1 and transmit antenna 2 transmit their first reference symbols during the first OFDM symbol 400 within the first subcarrier, the third and the fourth transmit antennas for which the pilot pattern are displayed in Figs. 6 and 7, have to transmit null symbols, in order not to interfere with the reference symbols being transmitted from antenna 1 and 2. In order to enable transmission of orthogonal pilot symbols or reference symbols $R_1$ from the third and the fourth transmit antenna, the first and the second transmit antennas transmit null symbols within the second subcarrier of the first OFDM symbol 400.

Comparing the first OFDM symbol 400 of all four transmit antennas, it can be seen in Figs. 6 and 7, for the transmit antennas 3 and 4, that they use the second subcarrier of the first OFDM symbol 400 to transmit their first reference symbols $R_1$. The third and fourth transmit antennas also repeat their reference symbols every six subcarriers. With this embodiment of the present invention only two subcarriers are needed in order to transmit orthogonal reference symbols from all four antennas, the pilot overhead is reduced by a factor of two.

Considering the second reference symbol $R_2$, which is transmitted during the fourth OFDM symbol 410 similar considerations hold as for the first OFDM symbol 400. Looking at Figs. 4 and 5 displaying the pilot pattern for transmit antennas 1 and 2, it can be seen that for the fourth OFDM symbol 410 transmit antennas 1 and 2 share the fourth subcarrier for simultaneous transmission of their second reference symbols $R_2$, while transmitting null symbols during the fifth subcarrier. Considering Figs. 6 and 7, displaying the pilot patterns for transmit antenna 3 and 4, it can be seen that during the fourth OFDM symbol 410 both antennas transmit a null symbol during the fourth subcarrier, while transmitting their second reference symbols $R_2$ during the fifth subcarrier being mutually orthogonal by utilizing real and imaginary part of the complex plane, and being orthogonal to the signals transmitted by the first and second antenna due to the fact that they transmit null symbols on these subcarriers. For all considerations done above, the reference symbols are repeated every six subcarriers along the frequency domain.

From the example considered within Figs. 4-7, it can be seen that compared to the state of the art concept, which was illustrated in Figs. 9-12, the pilot overhead can be reduced from 18% to 9% or generally by a factor of two.

In order to summarize the benefits or advantages that can be obtained from embodiments of the present invention, the following Tab. 1 shall point out the achievable advantages versus the number of transmit antennas.

Tab. 1

| Number of transmit antennas | 1 | 2 | 3 | 4 |
|---|---|---|---|---|
| Pilot overhead in considered OFDM frame (conventional approach) | 4.5% | 9% | 18% | 36% |
| Pilot overhead in considered OFDM frame (inventive approach) | 4.5% | 4.5% | 9% | 18% |

Depending on certain implementation requirements of the inventive methods, the inventive methods can be implemented in hardware or in software. The implementation can be performed using a digital storage medium, in particular a disc, DVD or a CD having electronically readable control signals stored thereon which cooperate with a programmable computer system such that the inventive methods are performed. Generally, the present invention is, therefore, a computer program product with a program stored on a machine readable carrier, the program code being operative for performing the inventive methods and the computer program product runs on a computer. In other words, the inventive methods are, therefore, a computer program having a program code for performing at least one of the inventive methods when the computer program runs on a computer.

List of References

| | |
|---|---|
| 100 | Transmitter apparatus |
| 110 | First transmit antenna |
| 120 | Second transmit antenna |
| 200 | Receiver apparatus |
| 210 | Receive antenna |
| 220 | Signal processor |
| 250 | Base station |
| 260 | User equipment |
| 265 | Receive antenna |
| 271...27N | N Transmit antennas |
| | |
| 300 | Complex plane |

| | |
|---|---|
| 310 | Real axis |
| 320 | Imaginary axis |
| 400 | First OFDM symbol carrying reference symbols $R_1$ |
| 410 | Fourth OFDM symbol carrying reference symbols $R_2$ |
| 801-7 | OFDM symbols |
| 811-3 | Subcarriers |
| 901 | 1st OFDM symbol in the frame |
| 905 | 5th OFDM symbol in the frame |
| 911-7 | Subcarriers |
| 1001 | 1st OFDM symbol in the frame |
| 1005 | 5th OFDM symbol in the frame |
| 1011-7 | Subcarriers |

**Claims**

1. Transmitter apparatus (100) for transmitting signals to a receiver, the transmitter apparatus comprising a plurality of transmit antennas having a first transmit antenna (110) with a first radio channel $\underline{H}_1$ to the receiver and a second transmit antenna (120) with a second radio channel $\underline{H}_2$ to the receiver, being adapted for simultaneously transmitting at the same frequency a first pilot symbol from the first transmit antenna (110) and a second pilot symbol from the second transmit antenna (120) while not transmitting on other transmit antennas at the same frequency, the first and second pilot symbols being adapted to the first and second radio channels $\underline{H}_1$ and $\underline{H}_2$, the first and second pilot symbols being detectable by evaluating a complex amplitude and phase of the signal being generated by superimposing the signals transmitted over the first and second radio channels $\underline{H}_1$ and $\underline{H}_2$.

2. Transmitter apparatus (100) of claim 1, wherein the transmitter apparatus (100) is adapted for transmitting orthogonal frequency division multiplexing, OFDM, signals having a plurality of pilot symbols on different subcarriers, the pilot symbols of one subcarrier being transmitted simultaneously from two different transmit antennas.

3. Transmitter apparatus (100) of one of the claims 1 or 2, wherein the transmitter apparatus (100) is adapted for determining channel state information on radio channels between transmit antennas and the receiver, and for adapting a transmit signal from a transmit antenna according to the channel state information of the radio channel between the transmit antenna and the receiver.

4. Transmitter apparatus (100) of one of the claims 1 to 3, wherein the transmitter apparatus (100) is adapted for being operative in a Time Division Duplex, TDD, mode.

5. Method for transmitting signals to a receiver from a plurality of transmit antennas having a first transmit antenna (110) with a first radio channel $\underline{H}_1$ to the receiver and a second transmit antenna (120) with a second radio channel $\underline{H}_2$ to the receiver, comprising the steps of:

   adapting a first and a second pilot symbol to the first and second radio channels $\underline{H}_1$ and $\underline{H}_2$, such that the first and the second pilot symbols can be determined from a signal generated by superimposing the signals transmitted over the first and second radio channels $\underline{H}_1$ and $\underline{H}_2$, the first and second pilot symbols being detectable by evaluating a complex amplitude and phase of the signal being generated by superimposing the signals transmitted over the first and second radio channels $\underline{H}_1$ and $\underline{H}_2$; and
   transmitting simultaneously at the same frequency the first pilot symbol from the first transmit antenna (110) and the second pilot symbol from the second transmit antenna (120) while not transmitting from other transmit antennas at the same frequency.

6. A communication system, comprising a transmitter apparatus (100) of one of claims 1 to 4; and
   a receiver apparatus (200) for receiving a first and a second pilot symbol from a received signal, which is a superposition of the first pilot symbol being transmitted from a first transmit antenna and a second pilot symbol being transmitted from a second transmit antenna, the first and second pilot symbols being transmitted simultaneously at the same frequency, comprising:

a receive antenna (210) for receiving the signals; and
a signal processor (220)for determining the first and second pilot symbol by evaluating a complex amplitude of the received signal.

7. Computer program having a program code for performing the method of claim 5, when the program code runs on a computer.

**Patentansprüche**

1. Sendervorrichtung (100) zum Senden von Signalen an einen Empfänger, wobei die Sendervorrichtung eine Mehrzahl von Sendeantennen umfasst, die eine erste Sendeantenne (110) mit einem ersten Funkkanal $\underline{H}_1$ zu dem Empfänger und eine zweite Sendeantenne (120) mit einem zweiten Funkkanal $\underline{H}_2$ zu dem Empfänger aufweist, die angepasst sind zum gleichzeitigen Senden eines ersten Pilotsymbols von der ersten Sendeantenne (110) und eines zweites Pilotsymbols von der zweiten Sendeantenne (110) mit der gleichen Frequenz, während auf anderen Sendeantennen nicht mit der gleichen Frequenz gesendet wird, wobei das erste und das zweite Pilotsymbol angepasst sind an den ersten und den zweiten Funkkanal $\underline{H}_1$ und $\underline{H}_2$, wobei das erste und das zweite Pilotsymbol erfassbar sind durch Bewerten einer komplexen Amplitude und Phase des Signals, das durch Überlagern der Signale erzeugt wird, die über den ersten und den zweiten Funkkanal $\underline{H}_1$ und $\underline{H}_2$ gesendet werden.

2. Sendervorrichtung (100) gemäß Anspruch 1, wobei die Sendervorrichtung (100) angepasst ist zum Senden von orthogonalen Frequenzmultiplex-, OFDM-, Signalen mit einer Mehrzahl von Pilotsymbolen auf unterschiedlichen Unterträgern, wobei die Pilotsymbole von einem Unterträger gleichzeitig von zwei unterschiedlichen Sendeantennen gesendet werden.

3. Sendervorrichtung (100) gemäß einem der Ansprüche 1 oder 2, wobei die Sendervorrichtung (100) angepasst ist zum Bestimmen von Kanalzustandsinformationen auf Funkkanälen zwischen Sendeantennen und dem Empfänger, und zum Anpassen eines Sendesignals von einer Sendeantenne gemäß den Kanalzustandsinformationen des Funkkanals zwischen der Sendeantenne und dem Empfänger.

4. Sendervorrichtung (100) gemäß einem der Ansprüche 1 bis 3, wobei die Sendervorrichtung (100) angepasst ist, um in einem Zeitmultiplex-, TDD-, Modus wirksam zu sein.

5. Verfahren zum Senden von Signalen an einen Empfänger von einer Mehrzahl von Sendeantennen mit einer ersten Sendeantenne (110) mit einem ersten Funkkanal $\underline{H}_1$ zu dem Empfänger und einer zweiten Sendeantenne (120) mit einem zweiten Funkkanal $\underline{H}_2$ zu dem Empfänger, das folgende Schritte umfasst:

Anpassen eines ersten und eines zweites Pilotsymbols an den ersten und den zweiten Funkkanal $\underline{H}_1$ und $\underline{H}_2$, so dass das erste und das zweite Pilotsymbol bestimmt werden können von einem Signal, das durch Überlagern der Signale erzeugt wird, die über den ersten und den zweiten Funkkanal $\underline{H}_1$ und $\underline{H}_2$ übertragen werden, wobei das erste und das zweite Pilotsymbol erfassbar sind durch Bewerten einer komplexen Amplitude und Phase des Signals, das durch Überlagern der Signale erzeugt wird, die über den ersten und den zweiten Funkkanal $\underline{H}_1$ und $\underline{H}_2$ übertragen werden; und
Senden des ersten Pilotsymbols von der ersten Sendeantenne (110) und des zweiten Pilotsymbols von der zweiten Sendeantenne (120), gleichzeitig mit der gleichen Frequenz, während von anderen Sendeantennen nicht mit der gleichen Frequenz gesendet wird.

6. Ein Kommunikationssystem, das eine Sendervorrichtung (100) gemäß einem der Ansprüche 1 bis 4 umfasst; und eine Empfängervorrichtung (200) zum Empfangen eines ersten und eines zweiten Pilotsymbols von einem empfangenen Signal, das eine Überlagerung des ersten Pilotsymbols, das von einer ersten Sendeantenne gesendet wird, und eines zweiten Pilotsymbols, das von einer zweiten Sendeantenne gesendet wird, ist, wobei das erste und das zweite Pilotsymbol gleichzeitig mit der gleichen Frequenz gesendet werden, die folgende Merkmale umfasst:

eine Empfangsantenne (210) zum Empfangen der Signale; und
einen Signalprozessor (220) zum Bestimmen des ersten und des zweiten Pilotsymbols durch Bewerten einer komplexen Amplitude des empfangenen Signals.

**7.** Computerprogramm mit einem Programmcode zum Durchführen des Verfahrens gemäß Anspruch 5, wenn der Programmcode auf einem Computer läuft.

**Revendications**

**1.** Appareil émetteur (100) pour transmettre des signaux à un récepteur, l'appareil émetteur comprenant une pluralité d'antennes d'émission présentant une première antenne d'émission (110) avec un premier canal de transmission par radio $\underline{H}_1$ vers le récepteur et une deuxième antenne d'émission (120) avec un deuxième canal de transmission par radio $\underline{H}_2$ vers le récepteur, adapté pour émettre simultanément à la même fréquence un premier symbole pilote de la première antenne d'émission (110) et un deuxième symbole pilote de la deuxième antenne d'émission (120) tout en n'émettant pas sur d'autres antennes d'émission à la même fréquence, les premier et deuxième symboles pilotes étant adaptés aux premier et deuxième canaux de transmission par radio $\underline{H}_1$ et $\underline{H}_2$, les premier et deuxième symboles pilotes pouvant être détectés en évaluant une amplitude et une phase complexes du signal généré en superposant les signaux transmis par les premier et deuxième canaux de transmission par radio $\underline{H}_1$ et $\underline{H}_2$.

**2.** Appareil émetteur (100) selon la revendication 1, dans lequel l'appareil émetteur (100) est adapté pour émettre des signaux de multiplexage orthogonal par répartition en fréquences, OFDM, présentant une pluralité de symboles pilotes sur différentes sous-porteuses, les symboles pilotes d'une sous-porteuse étant émis simultanément à partir de deux antennes d'émission différentes.

**3.** Appareil émetteur (100) selon l'une des revendications 1 ou 2, dans lequel l'appareil émetteur (100) est adapté pour déterminer des informations d'état de canal relatives aux canaux de transmission par radio entre antennes d'émission et le récepteur, et pour adapter un signal d'émission d'une antenne d'émission selon les informations d'état de canal du canal de transmission par radio entre l'antenne d'émission et le récepteur.

**4.** Appareil émetteur (100) selon l'une des revendications 1 à 3, dans lequel l'appareil émetteur (100) est adapté pour être opérationnel en un mode de duplexage par répartition dans le temps, TDD.

**5.** Procédé pour émettre des signaux vers un récepteur à partir d'une pluralité d'antennes d'émission présentant une première antenne d'émission (110) avec un premier canal de transmission par radio $\underline{H}_1$ vers le récepteur et une deuxième antenne d'émission (120) avec un deuxième canal de transmission par radio $\underline{H}_2$ vers le récepteur, comprenant les étapes consistant à:

adapter un premier et un deuxième symbole pilote aux premier et deuxième canaux de transmission par radio $\underline{H}_1$ et $\underline{H}_2$, de sorte que le premier et le deuxième symbole pilote puissent être déterminés à partir d'un signal généré en superposant les signaux émis par les premier et deuxième canaux de transmission par radio $\underline{H}_1$ et $\underline{H}_2$, les premier et deuxième symboles pilotes pouvant être détectés en évaluant une amplitude et une phase complexes du signal généré en superposant les signaux transmis par les premier et deuxième canaux de transmission par radio $\underline{H}_1$ et $\underline{H}_2$; et
émettre simultanément à la même fréquence le premier symbole pilote à partir de la première antenne d'émission (110) et le deuxième symbole pilote à partir de la deuxième antenne d'émission (120) tout en n'émettant pas à partir d'autres antennes d'émission à la même fréquence.

**6.** Système de communication, comprenant un appareil émetteur (100) selon l'une des revendications 1 à 4; et un appareil récepteur (200) pour recevoir un premier et un deuxième symbole pilote à partir d'un signal reçu qui est une superposition du premier symbole pilote transmis à partir d'une première antenne d'émission et d'un deuxième symbole pilote transmis à partir d'une deuxième antenne d'émission, les premier et deuxième symboles pilotes étant transmis simultanément à la même fréquence, comprenant:

une antenne de réception (210) destinée à recevoir les signaux; et
un processeur de signal (220) destiné à déterminer le premier et le deuxième symbole pilote en évaluant une amplitude complexe du signal reçu.

**7.** Programme d'ordinateur ayant un code de programme pour réaliser le procédé selon la revendication 5 lorsque le code de programme est exécuté sur un ordinateur.

# FIG 1

EP 1 901 444 B1

# FIG 2

FIG 3

EP 1 901 444 B1

# FIG 4

ANTENNA 1

Frequency domain

EP 1 901 444 B1

: Null symbol

: First reference symbol        : Second reference symbol        D : Data

# FIG 5

ANTENNA 2      Frequency domain

400

0,5 ms

410

□ : Null symbol

□ : First reference symbol      □ : Second reference symbol      D : Data

EP 1 901 444 B1

# FIG 6

ANTENNA 3                    Frequency domain
                                   →

400

0,5 ms

410

▨ : Null symbol

▨ : First reference symbol          ▨ : Second reference symbol          ☐D☐ : Data

# FIG 7

ANTENNA 4       Frequency domain →

400

0,5 ms

410

▨ : Null symbol

▨ : First reference symbol     ▨ : Second reference symbol     D : Data

EP 1 901 444 B1

# FIG 8  (State of the art)

Frequency domain

801

802

803

804    0,5 ms

805

806

807

811 812 813 ...

▨ : First reference symbol       ▨ : Second reference symbol       D : Data

EP 1 901 444 B1

FIG 9 (State of the art)

ANTENNA 1

Frequency domain

901

0,5 ms

905

911  912  913  914  915  916  917

▨ : Null symbol

▨ : First reference symbol        ▨ : Second reference symbol        ☐ : Data

EP 1 901 444 B1

FIG 10 (State of the art)

ANTENNA 2                    Frequency domain

Null symbol

First reference symbol        Second reference symbol        D : Data

FIG 11 (State of the art)

ANTENNA 3                Frequency domain

0,5 ms

EP 1 901 444 B1

☒ : Null symbol

☒ : First reference symbol          ☒ : Second reference symbol          [D] : Data

# FIG 12 (State of the art)

ANTENNA 4

Frequency domain →

0,5 ms

EP 1 901 444 B1

▨ 0 : Null symbol

▨ R₁ : First reference symbol       ▨ R₂ : Second reference symbol       D : Data

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1681783 A1
- EP 1566917 A2
- WO 0169814 A
- WO 0225831 A2

### Non-patent literature cited in the description

- **G. AUER ; E. KARIPIDIS.** Pilot-Symbol Aided Channel Estimation for OFDM: a Separated Approach for Smoothing and Interpolation. *Proc. IEEE Intern. Conf. Commun.,* May 2005
- **P. HÖHER ; S. KAISER ; P. ROBERTSON.** Pilot-Symbol Aided Channel Estimation in Time and Frequency. *Proc. Communication Theory Mini-Conf. (CTMC) within IEEE Global Telecommun. Conf. (Globecom'97),* 1997, 90-96
- **P. HÖHER.** TCM on Frequency Selective Land-Mobile Radio Channels. *Proc. 5th Tirrenia Int. Workshop on Fig. Commun.,* September 1991, 317-328
- **R. NILSSON ; O. EDFORS ; M. SANDELL ; P.O. BÖRJESSON.** An Analysis of Two-Dimensional Pilot-Symbol Assisted Modulation for OFDM. *Proc. IEEE Intern. Conf. Pers. Wireless Commun. (ICP-WC'97),* 1997, 71-74